# EUROPEAN PATENT SPECIFICATION

(11) **EP 3 364 828 B1**
(45) Date of publication and mention of the grant of the patent: **11.05.2022**
(21) Application number: 16779131.8
(22) Date of filing: 12.10.2016
(51) Int. Cl.: A47J 31/40, A47J 31/52

(54) **EXPANDABLE FUNCTIONALITY BEVERAGE PREPARATION MACHINE**
GETRÄNKEHERSTELLUNGSMASCHINE MIT ERWEITERBAREN FUNKTIONEN
MACHINE DE PRÉPARATION DE BOISSON À FONCTIONNALITÉ EXTENSIBLE

(30) Priority: 23.10.2015 EP 15191140
(43) Date of publication of application: 29.08.2018
(73) Proprietor: Société des Produits Nestlé S.A., 1800 Vevey (CH)
(72) Inventor: PERENTES, Alexandre, 1036 Sullens (CH); AIT BOUZIAD, Youcef, 1026 Echandens (CH)
(74) Representative: Navarro Fernández, Maria Isabel
(86) International application number: PCT/EP2016/074408
(87) International publication number: WO 2017/067828

(56) References cited:
- WO-A1-2011/139151
- WO-A1-2015/059010
- WO-A2-2007/127525
- DE-A1-102006 032 707
- US-A- 4 211 342
- US-A1- 2008 201 241
- US-B2- 7 316 249

## Description

### TECHNICAL FIELD

The present invention relates to a beverage or foodstuff preparation machine and in particular to a user interface for control of said machine.

### BACKGROUND

Increasingly machines for the preparation of a beverage or foodstuff are configured to operate using a container that comprises a single-serving of a beverage or foodstuff material, e.g. coffee, tea, ice cream, yoghurt. The machine may be configured for preparation by processing said material in the container, e.g. with the addition of fluid, such as milk or water, and the application of mixing thereto, such a machine is disclosed in PCT/EP13/072692. Alternatively, the machine may be configured for preparation by at least partially extracting an ingredient of the material from the container, e.g. by dissolution or brewing, and expelling it into a receptacle for end user consumption. Examples of the latter such machines are provided in EP 2393404 A1, EP 2470053 A1, WO2009/113035, WO2015/059010, US 2008/201241, WO2011/139151.

The increased popularity of these machines may be partly attributed to enhanced user convenience compared to a conventional machine, e.g. compared to a manually operated coffee maker such as a stove-top espresso maker or cafetiere (French press).

In particular the aforesaid machines comprise: a component processing unit, which is operable to process the said material via the application of a fluid (typically water) to the desired beverage or foodstuff; and a control system to control the component processing unit to execute a preparation process. The control system is generally operable to execute numerous different preparation processes that comprise recipes for preparing the beverage or foodstuff according to user preference. Accordingly the control system comprises a user interface for user selection of the preparation process.

Often a user operates such machines in conjunction with auxiliary components which provide additional functionality and thus the option for further preparation processes. Taking a coffee machine as an example, the beverage machine is typically operable to prepare different coffee types based on the addition of water, e.g. ristretto, lungo, and a suitable auxiliary component may comprise a milk processing unit. The milk processing unit provides the option of further preparation processes that comprise the addition of milk e.g. cappuccino, late. It is desirable to have such a configuration of machine since a user can purchase the basic machine and add functionality when available/desired or when the finances of the user permit.

Accordingly it is desirable to provide a user with the option of selecting these new preparation processes. One solution as provided for in the Dehlongi Lattissima Pro, model number EN750.MB beverage machine, wherein the control system on a coffee machine is configured to detect an auxiliary product in the form of a milk processing unit and to control a graphical user interface on the machine. In particular the machine comprises a docking interface for docking with part of the milk processing unit. The control system comprises an electrical switch to detect said docking and to provide a signal in the form of closing or opening of a circuit. The control of the graphical user interface comprises the illumination of icons at predetermined positions on the user interface, whereby the icons are selectable by a user to execute the additional preparation processes associated with the milk processing unit. A drawback of such an arrangement is that it cannot be easily adapted to enable operation of the machine with further auxiliary components. A yet further drawback is that the graphical user interface cannot be adapted to incorporate the option of selection of new preparation processes.

Thus in spite of the considerable effort already invested in the development of said control systems and the associated user interfaces further improvements are desirable.

### SUMMARY OF THE INVENTION

An object of the invention is to provide a beverage or foodstuff preparation machine which is expandable such that it can operate with a range of auxiliary components.

In particular it would be advantageous to provide a control system of such a machine that comprises a user interface that can interface with a range of different auxiliary components.

It would be advantageous to provide such a user interface that is cosmetically appealing.

It would be advantageous to provide such a control system that is cost effective.

It would be advantageous to provide such a control system that is convenient to operate.

Objects of the invention are achieved by: the beverage or foodstuff preparation machine according to independent claim 1 and the system according to claim 10.

Disclosed herein according to a first aspect of the invention is a beverage or foodstuff preparation machine comprising a component processing unit to process a beverage or foodstuff component to prepare a beverage or foodstuff therefrom and an auxiliary component interface; and an auxiliary component interface. The machine further comprising a control system operable to execute a preparation process comprising (i.e. as part of said process) control of said component processing unit to prepare the beverage or foodstuff. The control system comprising a user interface to receive a user selection of a preparation process and further comprising a communication interface of the auxiliary component interface to receive auxiliary component information stored on an auxiliary component. The control system operable to: receive said auxiliary component information from an auxiliary component; and enable, using the auxiliary component information, a user to select via the user interface one or more preparation processes that at least partially utilise the auxiliary component (i.e. in combination with the component processing unit).

Accordingly an object of the invention is solved since the beverage or foodstuff machine is expandable such that it can operate with a range of auxiliary components. In particular information, i.e. data, is transferred to the said machine from the auxiliary component and is processed by said machine to enable a user to select on the machine a preparation process that comprises control of the auxiliary component. The machine is therefore not restricted to operation with a limited list of known auxiliary components. As new auxiliary components become available (or as existing components are updated) the machine can adapt to operate with them by receiving information specific to the auxiliary component and processing this information to adapt the machine accordingly.

The control system is preferably operable to: use the auxiliary component information to reconfigure (e.g. adjust, restructure) the user interface to enable a user to select (e.g. via an icon) one or more preparation processes that at least partially utilise the auxiliary component.

The control system is preferably programmable using the auxiliary component information to control the component processing unit to be operable to execute the one or more processes that at least partially utilise the auxiliary component. Typically a memory unit associated with a processor of the control system can have executable programs related to the process stored thereon.

The control system may comprise a processor operatively connected to the: user interface; the auxiliary component interface; component processing unit. The user interface may be reconfigured by instructions sent from the processor to the user interface. The control system may be programmable by the storage on a memory unit associated with the processor of preparation process that comprises control of the auxiliary component.

To indicate the available processes to a user the user interface may comprise an output unit. The output unit may comprise a display such as a graphic or character liquid crystal display (LCD) or light emitting diode (LED) display. The output unit may indicate the available processes to a user: by an icon that may represent a process, the icon may be illuminable; an LED that may comprise or have associated therewith indicia that represent a process. To enable a user to select processes the user interface may comprise an input unit. The input unit may comprise buttons or touch sensing or screen edge buttons associated with the display (i.e. for selection of said icons).

The auxiliary component information may comprise information to enable the identification of the auxiliary component from other such auxiliary components. It may for example comprise an identifier such as a numeric or alpha numeric identifier. The identifier may be used to identify the configuration of the user interface and/or information to program one or more preparation processes that use the auxiliary component. Said use of the information may comprise accessing a database on the machine and/or on a remote resource (e.g. if not in the machine). The database may be accessed via a key value database type, such as a lookup table. The auxiliary component information may comprise information to reconfigure the user interface. In such an example the aforesaid identifier may additionally be used to obtain information to program one or more preparation processes. The auxiliary component information may comprise information to program one or more preparation processes that use the auxiliary component. In such an example the aforesaid identifier may additionally be used to obtain information to reconfigure the user interface.

The communication interface of the auxiliary component interface is for data transfer. The communication interface may comprise a wireless communication interface and is generally operable to transmit and receive wireless signals by a radio. It may be at least one selected from a group consisting of: a wireless local area network interface such as described in the Institute of Electronics Engineers (IEEE) 802.11 standard; Bluetooth^{™} from the Bluetooth Special Interest Group of Kirkland Wash; a reader for interface with a radio frequency identifier (RFID) tag; and optional further wireless interfaces such as a near field communication interface. Alternatively the communication interface may comprise a wired communication interface, such as at least one selected from a group consisting of: RS-232; USB; I²C; wired local area network interface such as described in the Institute of Electronics Engineers (IEEE) 802.3 standard. The wired communication interface may also be operable to supply power to the auxiliary component, e.g. from its own power supply unit (PSU), i.e. the communication interface comprises power-line communication (PLC). The latter configuration is advantageous since a separate PSU and corresponding connection to the mains electrical supply is thus obviated for the auxiliary component.

To enable the beverage or foodstuff preparation machine to connect with and thus operate with more than one auxiliary component at a given instant there may be: more than one communication interface, i.e. a plurality of those selected from either of the above lists; a single communication interface configured for concurrent connection with more than one auxiliary component (e.g. the machine acts as a server with the auxiliary components as clients, whereby a client may by assigned a port).

The communication interface of the auxiliary component interface may be a bidirectional interface. A bidirectional interface may be used to determine whether the auxiliary component is still in communication with the beverage or foodstuff preparation machine. As an example messages may be periodically sent from the auxiliary component to said machine. If a message is not received within a specified time interval then at timeout the auxiliary component may be determined as disconnected. Alternatively the message may be sent as part of an invocation and response process. The message may comprise the identifier. A bidirectional interface may be used as part of the control system controlling the auxiliary component over the auxiliary component. In particular a preparation process can comprise the control system of the beverage or foodstuff machine controlling the auxiliary component over the auxiliary component interface and receiving feedback from the auxiliary component with respect to said control. The feedback may comprise a message communicating the completion of an instructed process, e.g.: for an auxiliary component that comprises a milk processing unit the process may be the supply of a defined quantity of frothed and heated milk to a receptacle; for an auxiliary component that comprises an auxiliary product unit the process may be the supply of a layer such as syrup in between or after coffee and/or milk layers.

The process that at least partially utilises the auxiliary component may comprise the control system controlling one or more auxiliary components (e.g. an auxiliary processing unit of the or each auxiliary components) via the communication interface of the auxiliary component interface (e.g. by transferring process information to a control system of the or each auxiliary component).

In particular the control system may be configured to control the component processing unit and auxiliary component concurrently and/or sequentially. In the instance of sequential operation layers of component from the beverage or foodstuff machine and the auxiliary component may be alternatively dispensed. In the instance or concurrent operation a layer comprising both components may be dispensed.

The process that at least partially utilises the auxiliary component may comprise providing instructions to an end user via the user interface for end user control of the auxiliary component.

The control system of the machine may be operable to: determine when an auxiliary component is removed from data communication with the communication interface of the auxiliary component interface; and to disable the user selection via the user interface of the one or more preparation processes that at least partially utilise the auxiliary component.

In the example of a wireless communication interface of the auxiliary component interface, the beverage or foodstuff preparation machine may be operable to receive said information without physically docking with an auxiliary component. Alternatively for both wireless and wired communication interfaces the auxiliary component interface may further comprise a docking interface for physically docking (e.g. removably docking) an auxiliary component with the machine. The docking interface preferably comprises a first interface portion arranged on said machine dockable with a second interface portion arranged on the auxiliary component. The docking interface is preferably configured such that: an outlet and/or output of an auxiliary processing unit of a docked auxiliary component is arranged to supply an auxiliary product or apply an auxiliary process to a foodstuff or beverage preferably in a receptacle.

The control system of the machine may be operable to: receive said auxiliary component information from a plurality of auxiliary components; and to enable using the auxiliary component information a user to select via the user interface one or more preparation processes that at least partially utilise each (e.g. a plurality of processes which each use a different auxiliary component) and/or a combination (e.g. processes that use more than one auxiliary component) of the auxiliary components. In particular information from one or more subsequent auxiliary components can be received and utilised when one or more auxiliary components are operatively connected to the beverage or foodstuff preparation machine. The control system may be operable to reconfigure the user interface to enable a user to select one or more preparation processes that at least partially utilise each and/or a combination of the auxiliary components. In particular the user interface may be reconfigured to display auxiliary one or more auxiliary icons at the same time for the selection of processes that use one or a combination of different auxiliary components. The control system may be programmable to execute the one or more processes that at least partially utilise each and/or a combination of the auxiliary components.

The control system may be operable to use the received auxiliary component information to; retrieve user interface configuration information and preferably to reconfigure said interface using the retrieved user interface configuration information; and/or retrieve process information (i.e. information for processes that at least partially utilise the auxiliary component) and preferably to enable operation of a process using the retrieved process information. The aforesaid information may be at least partially retrieved from the machine itself, e.g. it is retrieved from a memory associated with the processor preferably using a lookup table. The aforesaid information may be at least partially retrieved from a remote resource via a communication interface (e.g. the same interface as the auxiliary component interface or an additional communication interface) of the machine. The communication interface is configured for communication over a network such as the internet or the cellular network. The remote resource is typically arranged remote from the beverage of foodstuff preparation machine, e.g. at a different location. The remote resource may comprise a server which is embodied as hardware and/or software. Alternatively it may comprise a peer to peer network or other distributed system. The control system of the machine may be operable to determine if said user interface configuration information and/or process information is stored on the machine and if not then to obtain said information from the remote resource. It may also be configured to store the information retrieved from the remote resource locally on the machine. In this way it does not have to be obtained from the remote resource again.

The control system of the machine may be operable to reconfigure the user interface by displaying an auxiliary icon to select the process that at least partially utilises the auxiliary component. The auxiliary icon is preferably displayed with indicia to indicate said process. A plurality of auxiliary icons each of which are to select said processes may be disposed about a periphery of one or a group of main icons, the main icons to select processes that are executed entirely on the beverage or foodstuff machine. The main icons may remain in the same position when the or each auxiliary icons are displayed. The periphery may be about a circumferentially extending line, which extends around the or each main icon. The periphery may be along a side edge of main icons. Alternatively the control system of the machine may be operable to configure the user interface by activating a light source such as an LED related to the process that at least partially utilises the auxiliary component.

The component processing unit generally is operable perform said preparation by the addition of fluid, such as water or milk to the beverage or foodstuff material. The component processing unit may comprise one of an: an extraction unit; a dissolution unit; a mixing unit. The component processing unit may further comprise a fluid supply that is operable to supply fluid to the aforesaid unit. Generally the fluid supply comprises a fluid pump and a fluid heater. The aforesaid units may be configured for operation with a container containing beverage or foodstuff material.

The component processed by the component processing unit may be a container or material in situ. The container is for use (e.g. it is suitably dimensioned) by a beverage or foodstuff preparation machine. The container for containing beverage or foodstuff material (e.g. it has an internal volume and may be food safe). The container may be a single-serving container, i.e. it is dimensioned for containing a dosage of beverage or foodstuff material for preparation of a single serving (e.g. pre portioned) of said product. The container may be a single-use container, i.e. it is intended to be used in a single preparation process after which it is preferably rendered unusable, e.g. by perforation, penetration, removal of a lid or exhaustion of said material. The container may comprise the beverage or foodstuff material contained therein. The container may comprise one of the following: capsule; packet; receptacle for end user consumption of the beverage or foodstuff therefrom. The capsule may have an internal volume of 5 - 80 ml. The receptacle may have an internal volume of 150 - 350 ml. The packet may have an internal volume of 150 - 350 ml or 200 - 300 ml or 50 - 150 depending on the application.

Disclosed herein according to a second aspect of the invention is provided an auxiliary component for interface with a beverage or foodstuff preparation machine. The auxiliary component comprising auxiliary component information stored on a memory unit; a communication interface (which corresponds to one of the aforedescribed communication interfaces of the auxiliary component interface of said machine) to transmit said information to the communication interface of the beverage or foodstuff preparation machine according to the first aspect; and an auxiliary processing unit operable to perform part of a preparation process e.g. by processing the beverage of foodstuff component of the machine (typically following its dispensing into a receptacle) and/or a further such component for addition to the beverage or foodstuff produced by said machine (typically following the latter's dispensing into the receptacle). The auxiliary processing unit may comprise at least one selected from a group consisting of: a steaming unit (e.g. a water steamer); a milk processing unit (e.g. a unit that conditions milk, such as by heating and/or frothing); an auxiliary product unit (e.g. a unit operable to dispense an auxiliary product, such as sugar, a topping or a flavouring that may comprise a syrup, fruit extract, chocolate etc.); a cooling unit (e.g. a unit operable to cool a liquid beverage or foodstuff, which may be used to produce a product such as iced mocha or tea).

The auxiliary component information is as disclosed in the first embodiment, e.g. information to enable the identification of the auxiliary component; and/or information to reconfigure the user interface; and/or information to program one or more preparation processes that use the auxiliary component.

The auxiliary component may comprise a control system comprising the communication interface; a processor operatively, which is operatively connected to said communication interface and auxiliary processing unit. The control system may further comprise a user interface.

The control system may be configured to receive information over the communication interface from the beverage or foodstuff preparation machine for control of the auxiliary processing unit as part of a preparation process executed by said machine.

The auxiliary processing unit of the auxiliary component may be controlled directly via the control system of the machine over the communication interface (e.g. in the example of a wired interface, whereby a separate control system of the auxiliary component may be obviated). The auxiliary component may be controlled by a user, e.g. utilising instructions for said control displayed on the user interface of the machine. In such examples the communication interface of the auxiliary component may comprise an RFID tag.

Disclosed herein according to a third aspect of the invention is provided a beverage or foodstuff preparation system comprising the beverage or foodstuff preparation machine according to the first aspect and one or more auxiliary components according to the second aspect. The system may further comprise a remote resource for provision of information to configure the user interface and/or programing of a preparation process that at least partially uses the auxiliary component on the beverage or foodstuff preparation machine. The remote resource is typically arranged remote from the beverage of foodstuff preparation machine, e.g. at a different location. The remote resource may comprise a server which is embodied as hardware and/or software. Alternatively it may comprise a peer to peer network or other distributed system.

Disclosed herein according to a fourth aspect of the invention is provided a method of configuring a beverage or foodstuff preparation system, e.g. for preparing a beverage or foodstuff. The method comprising: receiving on a beverage or foodstuff preparation machine auxiliary component information from an auxiliary component; and enabling using the auxiliary component information a user to select via a user interface of a control system of said machine one or more preparation processes that at least partially utilise the auxiliary component.

The method may further comprise operating the beverage or foodstuff machine in accordance with the first aspect and the auxiliary component in accordance with the second aspect. In particular the method may comprise reconfiguring using the auxiliary component information a user interface of a control system of the machine to enable a user to select one or more preparation processes that at least partially utilise the auxiliary component. The method may comprise programming using the auxiliary component information a control system of the beverage or foodstuff preparation machine to control a component processing unit of the beverage or foodstuff preparation machine to be operable to execute the one or more processes that at least partially utilise the auxiliary component.

The method may further comprise a user selecting a preparation process on the reconfigured user interface, the process comprising controlling: a component processing unit of the beverage or foodstuff preparation machine to process a beverage or foodstuff component to prepare a beverage or foodstuff therefrom; and an auxiliary processing unit of at least one the auxiliary component to perform part of the preparation process.

The method may further comprise the control system of the beverage or foodstuff preparation machine controlling over a communication interface as part of a preparation process the auxiliary component. In particular the auxiliary component may be controlled sequentially and/or concurrently with the component processing unit to produce a layered beverage.

Disclosed herein according to a fifth aspect of the invention is a beverage or foodstuff preparation system comprising a beverage or foodstuff preparation machine and an auxiliary component. The beverage or foodstuff preparation machine comprising a component processing unit to process a beverage or foodstuff component to prepare a beverage or foodstuff therefrom and an auxiliary component interface. The machine further comprising a control system operable to execute a preparation process comprising control of said component processing unit to prepare the beverage or foodstuff. The control system comprising a communication interface of the auxiliary component interface to control the auxiliary component.

The auxiliary component comprising: a communication interface for interface with a beverage or foodstuff preparation machine; an auxiliary processing unit (which may be configured as described for the second aspect) operable to perform part of a preparation process; a control system operatively connected to said communication interface and operable to control said auxiliary component processing unit as part of a preparation process. The control system of the beverage or foodstuff preparation machine operable to send information over the communication interface to control the auxiliary component as part of a preparation process.

The communication interface may be configured as discussed in the first aspect, as may other components of the machine. The auxiliary component may be configured according to any feature of the second aspect.

The beverage or foodstuff preparation machine may comprise a coffee preparation machine and the auxiliary component may comprise an auxiliary processing unit configured as a milk processing unit or an auxiliary component unit.

The control system of the machine may control the component processing unit and the auxiliary component concurrently and/or sequentially, preferably such that a layered beverage or foodstuff product is dispensed into a receptacle. In particular in the instance of sequential operation, layers of component from the beverage or foodstuff machine and the auxiliary component may be alternatively dispensed into a receptacle. In the instance or concurrent operation a layer comprising both components may be dispensed.

As part of a preparation process the auxiliary component may send messages over the communication interface to indicated completion of an instructed part of the preparation process, e.g. the dispensing of a particular layer.

The system may comprise an additional auxiliary component, which is controllable by the control system of said machine to perform a further part of a preparation process. In particular the further auxiliary component may be controlled concurrently and/or sequentially to the component processing unit of said machine and/or the auxiliary component, preferably such that a layered beverage or foodstuff product is dispensed in a receptacle. The further auxiliary component preferably comprise an auxiliary processing unit configured as an auxiliary product unit, whereby the beverage or foodstuff preparation machine is a coffee preparation machine and the auxiliary component has an auxiliary processing unit configured as a milk processing unit.

Disclosed herein according to a sixth aspect of the invention is provided a method of preparing, as a preparation process, a beverage or foodstuff with a beverage or foodstuff system, said system comprising a beverage or foodstuff preparation machine and an auxiliary component. The method comprising: said machine executing part of a preparation process (e.g. to prepare part of a beverage or foodstuff and typically to dispense it into a receptacle) via a control system controlling a component processing unit thereof; and controlling via a communication interface the auxiliary component to execute a further part of the preparation process (e.g. to prepare part of a beverage or foodstuff which may be dispensed into a receptacle, or to perform an operation, such as heating, cooling or frothing, on the beverage or foodstuff prepared by said machine, typically when in a receptacle). The method may further comprise controlling the component processing unit and auxiliary component concurrently and/or sequentially, preferably to produce a layered beverage or foodstuff product. The method may further comprise operating the machine in accordance with any feature of the fifth aspect.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 is an illustrative view showing an embodiment of a beverage or foodstuff preparation system that comprises a beverage or foodstuff preparation machine and a container according to the invention;
Figure 2 is a block diagram showing a control system of the beverage or foodstuff preparation machine according to figure 1;
Figure 3 is an illustrative diagram showing a beverage or foodstuff preparation machine docked with an auxiliary component;
Figure 4 comprises illustrative views showing a reconfigured user interfaces of the beverage or foodstuff preparation machine;
Figure 5 is a flow diagram showing the process of connecting an auxiliary component to a beverage or foodstuff preparation machine and reconfiguring said machine such that it is operable to execute preparation processes that utilise the auxiliary component.

### DETAILED DESCRIPTION OF EXEMPLARY EMBODIMENTS

### Beverage/Foodstuff Preparation System

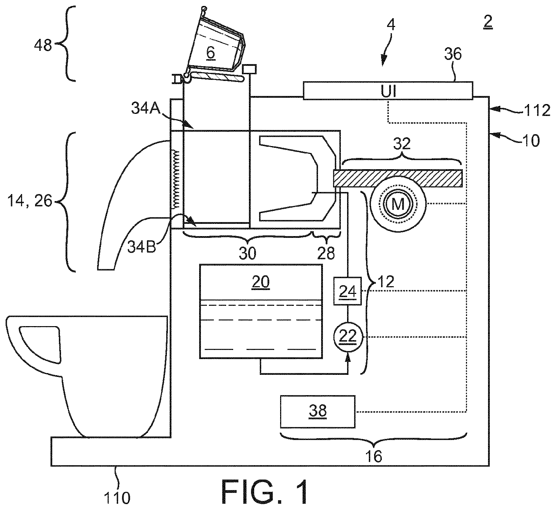

A beverage or foodstuff preparation system 2, an example of which is illustrated in figure 1, comprises at a first level thereof: a beverage or foodstuff preparation machine 4; a container 6, which are described following.

### Preparation Machine

The beverage or foodstuff preparation machine 4 is operable to process a beverage or foodstuff component, which may comprise a container containing a portion of beverage or foodstuff material (hereon material), or the material in situ, to a foodstuff and/or beverage for consumption by eating and/or drinking. Generally processing comprises the addition of fluid, such as water or milk to said material. A foodstuff material as defined herein may comprise a substance capable of being processed to a nutriment generally for eating, which may be chilled or hot, non-exhaustive examples of which are: yoghurt; mousse; parfait; soup; ice cream; sorbet; custard; smoothies. Generally the foodstuff is a liquid or a gel. A beverage material as defined herein may comprise a substance capable of being processed to a potable substance, which may be chilled or hot, non-exhaustive examples of which are: tea; coffee, including ground coffee; hot chocolate; milk; cordial. It will be appreciated that there is a degree of overlap between both definitions, i.e. a said machine 4 can prepare both a foodstuff and a beverage.

The preparation machine 4 is generally dimensioned for use on a work top, i.e. it is less than 70 cm in length, width and height. The preparation machine 4 comprises at a first level thereof: a housing 10; a component processing unit 14; an auxiliary component interface 50; and a control system 16, which are described sequentially as follows.

### Housing

The housing 10 houses and supports said machine first level components and comprises at a second level of the preparation machine 4: a base 110 for abutment of a horizontally arranged support surface; a body 112 for mounting thereto the other first level components.

### Component Processing Unit

Depending on the particular embodiment the component processing unit 14 may be configured to prepare a foodstuff/beverage by processing material arranged in: a single-serving, single use container 6 that is a packet or capsule; a container 6 that is a receptacle for end-user consumption therefrom; situ; and a combination thereof. In particular the material is processed to effect a change it its composition, e.g. by dissolution or extraction or mixing of an ingredient thereof. Embodiments of each configuration of will be discussed.

In general in all the embodiments the component processing unit 14 comprises at a second level of the preparation machine 4 a fluid supply 12 that is operable to supply fluid to the container 6. The fluid is in general water or milk, the fluid maybe conditioned (i.e. heated or cooled). The fluid supply 12 typically comprises at a third level of the preparation machine 4: a reservoir 20 for containing fluid, which in most applications is 1 - 5 litres of fluid; a fluid pump 22, such as a reciprocating or rotary pump that may be driven by an electrical motor or an induction coil; an optional fluid heater 24, which generally comprises an in-line, thermo block type heater; an outlet for supplying the fluid. The reservoir 20, fluid pump 22, fluid heater 24, and outlet are in fluid communication with each other in any suitable order and form a fluid line. The fluid supply 12 may optionally comprise a sensor to measure fluid flow rate and/or the amount of fluid delivered. An example of such a sensor is a flow meter, which may comprises a hall or other suitable sensor to measure rotation of a rotor, a signal from the sensor being provided to the processor 38 as will be discussed.

Component Processing Unit for Extraction of Foodstuff/Beverage from Container According to an embodiment the component processing unit 14 is operable: to receive the container 6 containing material; process the container 6 to extract one or more ingredients of a beverage therefrom, and to dispense the said ingredients into an alternate receptacle for end-user consumption. The container is generally a single-use, single-serving container such as a capsule or packet.

A component processing unit 14 for use with the said capsule will initially be described, an example of which is shown in figure 1. The component processing unit 14 comprises an extraction unit 26 operable to move between a capsule receiving position and a capsule extraction position, when moving from the capsule extraction position to the capsule receiving position, the extraction unit may be moved through or to a capsule ejection position, wherein a spent capsule can be ejected therefrom. The extraction unit 26 receives fluid from the fluid supply 12. The extraction unit 26 typically comprises: an injection head 28; a capsule holder 30; a capsule holder loading system 32; a capsule insertion channel 34A; a capsule ejection channel 34B, which are described sequentially.

The injection head 28 is configured to inject fluid into a cavity of the capsule 6 when held by the capsule holder 30, and to this end has mounted thereto an injector, which has a nozzle that is in fluid communication with the outlet of the fluid supply 12.

The capsule holder 30 is configured to hold the capsule 6 during extraction and to this end it is operatively linked to the injection head 28. The capsule holder 30 is operable to move to implement the said capsule receiving position and capsule extraction position: with the capsule holder in the capsule receiving position a capsule 6 can be supplied to the capsule holder 30 from the capsule insertion channel 34A; with the capsule holder 30 in the capsule extraction position a supplied capsule 6 is held by the holder 30, the injection head 28 can inject fluid into the cavity of the held capsule, and one or more ingredients can be extracted therefrom. When moving the capsule holder 30 from the capsule extraction position to the capsule receiving position, the capsule holder 30 can be moved through or to the said capsule ejection position, wherein a spent capsule 6 can be ejected from the capsule holder 30 via the capsule ejection channel 34B.

The capsule holder loading system 32 is operable to drive the capsule holder 30 between the capsule receiving position and the capsule extraction position.

The aforedescribed container extraction unit 14 is generally a pressurised extraction unit, e.g. the container is hydraulically sealed and subject to 5 - 20 bar during brewing. Generally the pump is an induction pump. The extraction unit may alternatively operate by centrifugation as disclosed in EP 2594171 A1.

The component processing unit 14 may alternatively comprise a dissolution unit configured as disclosed in EP 1472156 and in EP 1784344.

In the example of the container 6 comprising a packet the container processing unit 14 comprises an extraction and/or dissolution unit operable to receive the packet and to inject, at an inlet thereof, fluid from the fluid supply 12. The injected fluid mixes with material within the packet to at least partially prepare the beverage, which exits the packet via an outlet thereof. The extraction or dissolution unit comprises: a support mechanism to receive an unused packet and eject a spent packet; an injector configured to supply fluid to the packet from the outlet of the fluid supply. Further detail is provided in WO 2014/125123.

### Component Processing Unit for Preparation of Foodstuff/Beverage in Container for End User Consumption

According to a further embodiment the component processing unit 14 (not shown), is generally operable to prepare material stored in a container 6 that is a receptacle, such as a cup, pot or other suitable receptacle configured to hold approximately 150 - 350 ml of prepared product. Herein the component processing unit 14 comprises a mixing unit which comprises: agitator unit; an optional auxiliary product unit; thermal exchanger; receptacle support, which will be described sequentially.

The agitator unit is operable to agitate material within the receptacle for at least partial preparation thereof. The agitator unit may comprise any suitable mixing arrangement, e.g. a: planetary mixer; spiral mixer; vertical cut mixer. Typically the agitator unit comprises: an implement for mixing having a mixing head for contact with the material; and a drive unit, such as an electric motor or solenoid, to drive the mixing implement. In a preferred example of a planetary mixer the mixing head comprises an agitator that rotates with a radial angular velocity W1 on an offset shaft that rotates with gyration angular velocity W2, such an arrangement is disclosed in PCT7EP13/072692.

The auxiliary product unit is operable to supply an auxiliary product, such as a topping, to the container 6. The auxiliary product unit comprises: a reservoir to store said product; an electrically operated dispensing system to effect the dispensing of said product from the reservoir.

The thermal exchanger is operable to transfer and/or extract thermal energy from the receptacle. In an example of transfer of thermal energy it may comprise a heater such as thermo block. In an example of extraction of thermal energy it may comprise heat pump such as a refrigeration-type cycle heat pump. The receptacle support is operable to support the container during a preparation process such that the container remains stationary during agitation of the material therein by the agitator unit. The receptacle support preferably is thermally associated with the thermal exchanger such that transfer of thermal energy can occur with a supported receptacle.

In a variant of the above, the component processing unit 14 further comprises a dispensing mechanism for receiving a container 6 (such as a packet) and dispensing the associated material into the receptacle, where it is prepared. Such an example is disclosed in EP 14167344 A.

In a further variant of the above, the mixing unit comprises a dispensing mechanism operable to dispense from a reservoir a single serving of the associated material into the receptacle, where it is prepared and/or to prepare the material in situ before dispensing into the receptacle. Such an example is disclosed in WO 2010/034722 and in WO 2013/014142.

### Control System General

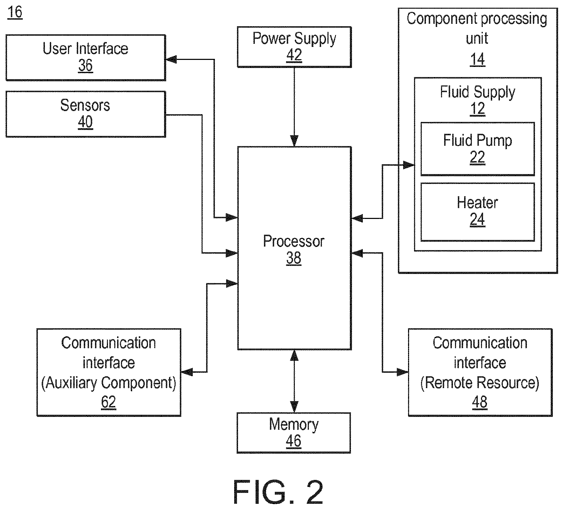

The control system 16, an example of which is illustrated in figure 2, is operable to control the component processing unit 14 to execute a preparation process, which comprises the preparation of the beverage/foodstuff. The control system 16 typically comprises: a user interface 36; a processor 38; optional sensors 40; an optional communication interface 48; a power supply 42, which are described sequentially.

The user interface 32 comprises hardware to enable an end user to interface with the processor 38 and hence is operatively connected thereto. To indicate the available processes to a user the user interface comprises an output unit. The output unit may comprise at least one selected from a group consisting of: a display such as a graphic or character liquid crystal display (LCD); light emitting diode (LED) display; LEDs which have indicia associated therewith. The output unit indicates the available preparation processes to a user, e.g. by one or more icons that represents a process; by one or more LEDs that may comprise or have associated therewith indicia that represent the process. To enable a user to select preparation processes the user interface comprises an input unit. The input unit may comprise: buttons or touch sensing or screen edge buttons associated with the display; buttons associated with LEDs. Commands related to the selection of a preparation process are transferred from the input unit to the processor 38 as a user interface signal. The user interface may comprise a separate processing unit (examples of which are provided below) to control the interface hardware which is operatively connected to the maser processor 38.

Optional sensors 40 are operatively connected to the processor 38 to provide an input for monitoring said process. The sensors 40 typically comprise one or more of the following: fluid temperature sensors; fluid level sensors; position sensors e.g. for sensing a position of the extraction unit 26; flow rate and/or volume sensors.

The processor 38 is generally operable to: receive an input, i.e. said commands from the user interface 36 and/or from the sensors 40; process the input according to program code stored on a memory unit (or as programed logic); provide an output, which is generally the said preparation process. The process may be executed with open-loop control, or more preferably with closed-loop control using the input signal from the sensors 40 as feedback. The processor 38 generally comprises memory, input and output system components, which are arranged as an integrated circuit, typically as a microprocessor or a microcontroller. The processor 38 may comprise other suitable integrated circuits, such as: an ASIC; a programmable logic device such as an FPGA; an analogue integrated circuit such as a controller. The processor 38 may also comprise one or more of the aforementioned integrated circuits, i.e. multiple processors. The processor 38 generally comprises a memory unit 46 for storage of the program code (such as preparation programs executable for a preparation process) and optionally data. The memory unit 46 typically comprises: a non-volatile memory e.g. EPROM, EEPROM or Flash for program code and operating parameter storage; volatile memory (RAM) for data storage. The memory unit may comprise separate and/or integrated (e.g. on a die of the processor) memory. Typically the processor 38 comprises a clock for timing of the preparation process (and for execution of instructions).

The communication interface 48 is for data communication between the preparation machine 4 and a remote resource. The communication interface 48 can be used to supply and/or receive information related to an auxiliary component as will be discussed. The communication interface 48 can be configured for cabled media or wireless media or a combination thereof, e.g.: a wired connection, such as RS-232, USB, I²C, Ethernet defined by IEEE 802.3; a wireless connection, such as wireless LAN (e.g. IEEE 802.11) or near field communication (NFC) or a cellular system such as GPRS or GSM. The communication interface 48 is operatively connected to the processor 38. Generally the communication interface comprises a separate processing unit (examples of which are provided above) to control communication hardware (e.g. an antenna) to interface with the maser processor 38. However, less complex configurations can be used e.g. a simple wired connection for serial communication directly with the processor 38.

The power supply 42 is operable to supply electrical energy to the processor 38 and component processing unit 14, and in particular the pump 22 as will be discussed. The power supply 42 may comprise various means, such as a battery or a unit to receive and condition a mains electrical supply.

### Remote Resource

The remote resource comprises a resource arranged distant (i.e. at a different location) to the machine 4. The remote resource comprises a database, such as a database server, operable to supply data (e.g. user interface and/or process data) to the machine. Typically the remote resource is a server system (e.g. embodied as hardware and/or software), a peer to peer network or other distributed system. The remote resource and machine 4 are in data communication with each other via a network such as the internet or the cellular network.

### Auxiliary Component Interface

The auxiliary component interface 50 of the beverage or foodstuff preparation machine 4 is for interface with a corresponding interface of an auxiliary component 52. The auxiliary component interface 50 comprises a communication interface 62 (which may be configured for wired or wireless communication and is discussed in more detail later on) of the control system 16 and optional docking interface 54

For both wireless and wired communication interfaces 62 the beverage or foodstuff preparation machine may comprise a docking interface 54 for physically docking (e.g. removably docking) an auxiliary component 52 with the machine 4. The docking interface 54 preferably comprises a first interface portion arranged on said machine dockable with a second interface portion arranged on the auxiliary component. The first and second interface portions may be configured with at least one selected from a group consisting of: an interference (i.e. friction) fit; snap fit; resilient fastener fit. Generally one of the first or second interfaces are insertable into the other of the second of first interfaces such that the docking interface 54 acts to locate the auxiliary component 52 in a particular position. The docking interface 54 is preferably configured such that: an outlet and/or output of an auxiliary processing unit of a docked auxiliary component is arranged to supply an auxiliary product or apply an auxiliary process to a foodstuff or beverage preferably in a receptacle.

### Control System According to Invention

The control system 16 further comprises a communication interface 62 of the auxiliary component interface 50 of the machine 4. The communication interface 62 is configured to receive auxiliary component information stored on an auxiliary component 52, which will be discussed in more detail following. The control system 16 is operable to: receive said auxiliary component information from an auxiliary component; enable using the auxiliary component information a user to select via the user interface 36 one or more preparation processes that at least partially utilise the auxiliary component. Advantageously the beverage or foodstuff machine 4 is expandable such that it can operate with a range of auxiliary components, enabling a user to select on the machine a preparation process that comprises control of the auxiliary component.

The communication interface 62 is for data transfer. It may be combined with the aforedescribed communication interface 48 or be a separate interface as generally described herein. As such the communication interface 62 can be configured for cabled media or wireless media or a combination thereof.

It is preferred that the communication interface 62 is a wireless communication interface and is generally operable to transmit and receive wireless signals by a radio. It may be at least one selected from a group consisting of: a wireless local area network interface such as described in the Institute of Electronics Engineers (IEEE) 802.11 standard; Bluetooth^{™} from the Bluetooth Special Interest Group of Kirkland Wash; and optional further wireless interfaces such as a near field communication interface and an RFID interface.

Examples of suitable wired communication interfaces 62 comprises at least one selected from a group consisting of: RS-232; USB; I²C; wired local area network interface such as described in the Institute of Electronics Engineers (IEEE) 802.3 standard.

With a wireless communication interface 62 the machine 4 may be operable to receive said information without physically docking with an auxiliary component, thus the docking interface 54 of the auxiliary component interface 50 is obviated.

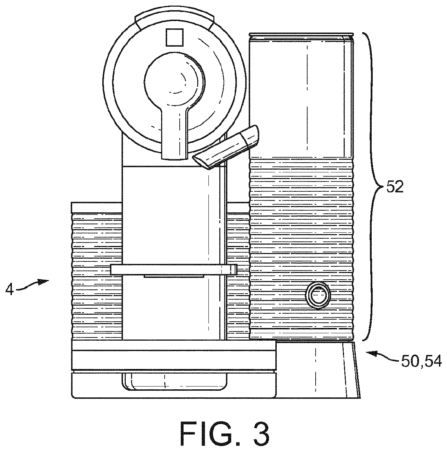

Figure 3 shows an example combination of the aforesaid configurations, wherein the machine 4 is for coffee preparation and the auxiliary component 52 is a milk processing unit. In particular the auxiliary component interface 50 comprises a wireless communication interface 62 in the form of a transceiver operable to send and receive radio signals to an RFID on the auxiliary component. Accordingly the auxiliary component information is transmitted via radio. The machine 4 is configured to physically dock with the auxiliary component 52, and thus the auxiliary component interface 50 comprises a docking interface 54 which is selected from one of the aforesaid configurations.

The aforesaid configuration of the control system 16 to enable using the auxiliary component information a user to select via the user interface 36 one or more preparation processes that at least partially utilise the auxiliary component may extend to various embodiments.

In a first embodiment the control system 16 may assign a reserved portion of the user interface 36 to the new preparation process associated with the auxiliary component 52. For example, in response to the received auxiliary component information the selection of: a button associated with an LED; or icon on the display, is associated with a process that utilises the auxiliary component. In this way reconfiguration of the user interface is not specifically required.

In a second embodiment the control system 16 is programmable using the auxiliary component information to control the component processing unit 14 to be operable to execute the one or more processes that at least partially utilise the auxiliary component 52. Typically the memory unit 46 associated with a processor 38 of the control system can have executable programs related to the process stored thereon. In an example the control system may use the auxiliary component information to identify one or more preparation processes associated with the auxiliary component and to enable the execution of the process. In particular the or each process may be identified on the memory unit 46 associated with the processor 38 and enabled for execution. Alternatively information comprising the or each process may be obtained by the control system and stored for execution on the memory unit 46. In the latter case, the information may be obtained from a remote resource and/or from the auxiliary component information itself.

In a third embodiment the control system 16 is operable to: use the auxiliary component information to reconfigure (e.g. adjust) the user interface 36 to enable a user to select one or more preparation processes that at least partially utilise the auxiliary component 52. That is to say that the user interface is in some way changed in response to determination of the presence of the auxiliary component. The user interface may be reconfigured by the processor 38 controlling the user interface 32, e.g. instructions sent to a separate processor which controls a display or as an output signal from the processor 38 when driving a display directly.

The user interface 36 may be reconfigured in various ways depending of the configuration of the output unit, e.g.: by the display of an auxiliary icon or LED for each associated additional process that at least partially utilises the auxiliary component. The auxiliary icon is preferably illuminated and may comprise indicia to indicate said process. The indicia may comprise an illustration of the product produced by the process, e.g. a particular coffee type.

More particularly one or a plurality of main icons 56 that relate to preparation processes that are executed entirely on the beverage or foodstuff machine 4 may be arranged in a first group and one or a plurality of auxiliary icons 58 which are associated with to process at least partially utilises the auxiliary component may be arranged in a second group. Generally the first group is arranged in a fixed position, i.e. it does not move with the addition of the second group. The second group may be disposed about a periphery of the first group. Advantageously there is more space for icons relating to numerous preparation processes (which may be associated with a single of multiple auxiliary components). The aforesaid periphery may comprise an entire periphery or partial periphery, such as a side edge.

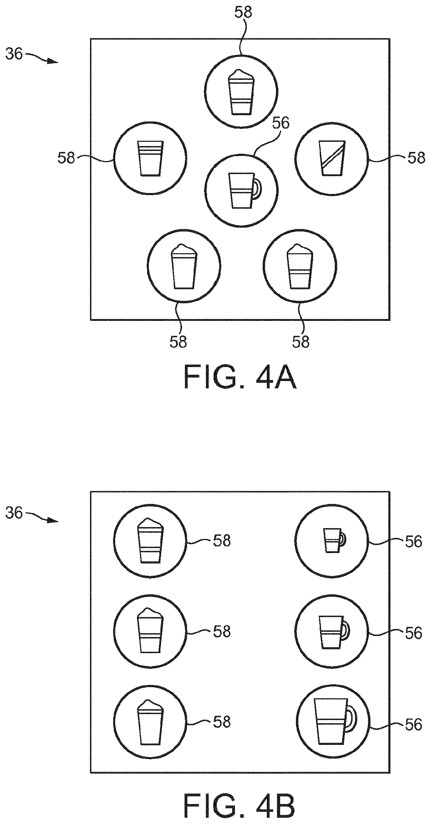

Figure 4A shows an example of the above, wherein there is a single main icon 56 as the first group and there are 5 auxiliary icons 58 circumferentially disposed about the main icon. In particular the main icon 56 is for selection of a preparation process that comprises a coffee without milk and the 5 auxiliary icons are for selection of preparation processes that comprise utilisation of one or more auxiliary components: e.g.: latte; cappuccino; cold coffee; layered combinations of coffee and milk etc. It will be appreciated that the example of figure 4A may be extended to comprise any number of auxiliary icons and any number of main icons (and for various machine and auxiliary component types). In the example of a plurality of main icons they can be arranged in a configuration to define a centre point about which the auxiliary icons are disposed. The configuration may comprise a polygon (such as a triangle, square or hexagon) with the centre point arranged at the centre and the auxiliary icons arranged at the vertices. In another specific example of the above the auxiliary icons may be disposed as a rectangle about one of more main icons.

Figure 4B shows an example of the above, wherein there are three main icons 56 as the first group and there are 3 auxiliary icons 58 peripherally disposed along a side edge of the main icons. In particular the main icons 56 are for selection of preparation processes that comprises a coffee without milk of three different sizes and the 3 auxiliary icons are for selection of preparation processes that comprises utilisation of one or more auxiliary components: latte; cappuccino; a cooled coffee. It will be appreciated that the example of figure 4B may be extended to comprise any number of auxiliary icons and any number of main icons (and for various machine and auxiliary component types).

The aforesaid first - third embodiments may be suitably combined, e.g. the second and third embodiment or the first and third embodiment or the first and second embodiment.

In view of the above first - third embodiments the auxiliary component information sent from the auxiliary component 52 and received on the machine 4 may comprise different quantities depending on the configuration of the system 2, which are discussed following.

In a first example the auxiliary component information may comprise information to enable the identification of the auxiliary component from other such auxiliary components. It may for example comprise a unique identifier such as a numeric or alpha numeric identifier. The identifier may be used to retrieve from a database the configuration of the user interface and/or information to program one or more preparation processes that use the auxiliary component as described above for the respective second and third embodiments. The database may be on the machine (e.g. the memory unit 46) and/or on a remote resource. The database may be accessed using the identifier as a key in a key value database storage paradigm, such as a lookup table. In particular the control system may be operable to determine if the user interface configuration information and/or process information is stored on the machine 4 and if not then to obtain said information from the remote resource. It may also be configured to store the information retrieved from the remote resource locally on the machine. Advantageously it does not have to be obtained from the remote resource again.

In a second example the auxiliary component information may comprise information to reconfigure the user interface 36. In particular the user interface information can be received by the control system 16 and processed by the processor 38 to reconfigure the user interface.

In a third example the auxiliary component information may comprise information to program the control system (i.e. the memory unit 46 thereof) with one or more preparation processes that use the auxiliary component 52. In particular the process information can be received by the control system 16, processed by the processor 38 and stored on the memory unit 46.

The auxiliary component information may comprise combinations of the above first - third examples, e.g. the first example in combination with the second or third example. With such combinations any required information not present in the auxiliary component information can be obtained via database using the identifier, e.g. an identifier in the auxiliary component information that also comprises user interface configuration information can be used to determine process information from a database.

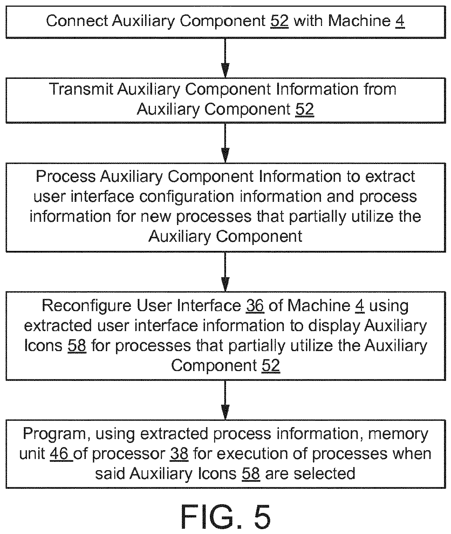

Figure 5 is a flow diagram showing an example abstraction of a process of reconfiguring the machine 4 using the auxiliary component information. In particular said information is a combination of the aforedescribed second and third examples and the user interface 36 and memory unit 46 are programmed according to the aforedescribed second and third embodiments.

The control system 16 of the machine 4 may be operable to: determine when an auxiliary component 52 is disconnected from data communication with the communication interface 62; and to disable the user selection via the user interface 36 of the one or more preparation processes that at least partially utilise the auxiliary component. In particular the user interface may be reconfigured back to its original state such that only the main icons 56 are displayed. To determine whether the auxiliary component has been disconnected messages may be periodically sent from the auxiliary component to said machine. If a message is not received within a specified time interval then at timeout the auxiliary component may be determined as disconnected. Alternatively the message may be sent as part of an invocation and response process. The message may comprise the identifier or other alpha numeric code such that the process is not computationally intensive.

The beverage or foodstuff preparation machine 4 may be operable with more than one auxiliary component 52 at a given time, e.g. it can execute processes that use different auxiliary components which are simultaneously operatively connected to the machine 4. It may also be operable to execute preparation processes that utilise more than one auxiliary component as part of a single process.

In particular the control system 16 of the machine 4 may be operable to: receive auxiliary component information from a plurality of auxiliary components; and to enable using the auxiliary component information a user to select via the user interface 36 one or more preparation processes that at least partially utilise each and/or a combination of the auxiliary components. The control system may be operable to reconfigure the user interface to enable a user to select said one or more preparation processes that at least partially utilise each and/or a combination of the auxiliary components. The aforedescribed user interface may be adapted to comprise auxiliary icons that relate to such processes, e.g. in the example shown in figure 4A by adding further auxiliary icons 58 around a first and then second annular ring. In a similar fashion the control system may be programmable to execute the one or more such processes.

In providing such functionality the control system 16 can be configured to: when receiving auxiliary component information from an auxiliary component determine if any other auxiliary components are present; and if so then determine if any processes exist which use more than one of the auxiliary components. The latter can be achieved via a database on the machine 4 and/or on the remote resource and/or in the auxiliary component information itself.

### Auxiliary Component

The auxiliary component 52 comprises: auxiliary component information stored on a memory unit; a communication interface to transmit said information to the communication interface 62 of the beverage or foodstuff preparation machine 4; and an auxiliary processing unit operable to perform part of a preparation process. Typically the auxiliary component comprises a similar control system to that of the beverage or foodstuff preparation machine, i.e. a processor operatively connected to the aforesaid: memory unit; communication interface; and auxiliary processing unit. It may optionally comprise a user interface, however an advantageous feature of the invention is that a user interface on the auxiliary component can be obviated for cost efficacy.

The auxiliary processing unit may comprise at least one selected from a group consisting of: a steaming unit (e.g. a water steamer); a milk processing unit (e.g. a unit that processes milk, such as by heating and/or frothing); an auxiliary product unit (e.g. a unit operable to dispense an auxiliary product such as: sugar; a topping or flavouring that may comprise a syrup, fruit extract, chocolate etc.); a cooling unit (e.g. a unit operable to cool a liquid beverage or foodstuff such as: a heat pump that operates by transfer of thermal energy to cool the beverage or foodstuff; a unit that can supply ice and/or cold water to the beverage or foodstuff); a frothing unit (e.g. a unit operable to froth a beverage in a receptacle). The particular configuration of the auxiliary processing unit is selected for the configuration of the beverage or foodstuff preparation machine 4.

### Processes Available Due to Auxiliary Component

The auxiliary component 52 provides one or more additional preparation processes for the beverage or foodstuff preparation machine 4. In particular such a preparation process executed by the control system 16 of the machine 4 may comprise providing instructions to an end user via the user interface 36 for end user control of the auxiliary component. As an example of this configuration, wherein the machine 4 is for coffee preparation and the auxiliary component 52 is a milk processing unit, the control system 16 as part of a preparation process for a coffee comprising processed milk (e.g. a latte or cappuccino) may control the component processing unit 14 to: dispense one or more expresso shots into a receptacle; provide instructions on the user interface 36 for end user control of the milk processing unit to process milk and its application into the receptacle, e.g. what settings to use on a user interface of the milk processing unit and when to supply processed milk to the receptacle.

In an alternate and preferred configuration the control system 16 controls the auxiliary component 52 via the communication interface 62. Such a configuration is preferred since it is more convenient for the end user. In particular the control system 16 may control the component processing unit 14 and auxiliary component concurrently and/or sequentially. In the instance of sequential operation layers of component from the beverage or foodstuff machine 4 and the auxiliary component may be alternatively dispensed. In the instance or concurrent operation a layer comprising both components may be dispensed. The auxiliary component 52 may communicate over the communication interface 62 to indicate the completion of part of an instructed process, e.g. the completion of the dispensing of an aforesaid layer, or an operation such as frothing of the beverage.

The control system 16 may control one or more further auxiliary components via the communication interface 62. Said control may be concurrent with the component processing unit 14 and/or the aforesaid auxiliary component or sequential. In particular further layers or mixed layers can be dispensed.

As a specific example, wherein the machine 4 is for coffee preparation and the auxiliary component 52 is a milk processing unit, the control system 16 as part of a preparation process for a coffee comprising processed milk (e.g. a latte or cappuccino) may control the component processing unit 14 to: dispense one or more espresso shots into a receptacle; control the milk processing unit to process (e.g. by heating and/or frothing) milk and dispense the correct quantity of milk in sequence with the coffee (generally after the coffee) into the receptacle. In particular the control system 16 may control the component processing unit 14 and the auxiliary component 52 to operate sequentially to supply one or more pairs of alternating layers of coffee and processed milk. They may also be controlled to operate at the same time to provide mixed layers adjacent either a coffee or milk layer. The first embodiment may be extended with additional auxiliary components, such as an auxiliary product unit for production of flavoured coffees (e.g. caramel latte) and/or a cooling unit to make cooled coffees (e.g. iced mocha). In such an example the control system 16 may control said auxiliary component to dispense flavouring layers in addition to the aforedescribed coffee and milk layers.

As a further specific example of the first embodiment, wherein the machine 4 is for frozen yoghurt preparation and the auxiliary component 52 is a topping unit, the control system 16 as part of a preparation process may control the component processing unit 14 to: prepare the yoghurt in a receptacle; control the topping unit to supply a topping to the frozen yogurt following its preparation.

### LIST OF REFERENCES

**2 Beverage or Foodstuff Preparation System**
**4 Beverage or Foodstuff Preparation Machine**
   10 Housing
      110 Base
      112 Body
   14 Component Processing Unit
      12 Fluid supply
         20 Reservoir
         22 Fluid pump
         24 fluid thermal exchanger
      26 Extraction Unit
         28 Injection head
         30 Capsule holder
         32 Capsule holder loading system
         34A Capsule insertion channel
         34B Capsule ejection channel
   16 Control system
      36 User interface
         56 Main icon
         58 Auxiliary icon
      38 Processor
         46 Memory unit
      40 Sensors
      42 Power supply
      48 Communication interface
      50 Auxiliary component interface
   54 Docking interface
**6 Container** (capsule/receptacle/packet)
**52 Auxiliary component**
**Remote resource**

## Claims

1. A beverage or foodstuff preparation machine (4) comprising:
a component processing unit (14) to process a beverage or foodstuff component to prepare a beverage or foodstuff therefrom;
an auxiliary component interface (50); and
a control system (16) operable to execute a preparation process comprising control of said component processing unit to prepare the beverage or foodstuff,
the control system (16) comprising a user interface (36) to receive a user selection of a preparation process and further comprising a communication interface (48) of the auxiliary component interface to receive auxiliary component information stored on an auxiliary component,
the control system (16) operable to: receive said auxiliary component information from an auxiliary component; and enable, using the received auxiliary component information, a user to select via the user interface one or more preparation processes that at least partially utilise the auxiliary component the auxiliary component information comprising:
information to enable the identification of the auxiliary component; and/or
information to reconfigure the user interface display; and/or
information to program one or more preparation processes that use the auxiliary component;
**characterized in that**
the control system (16) is operable to use the received auxiliary component information to retrieve user interface configuration information and/or retrieve process information for processes that at least partially utilise the auxiliary component,
wherein said machine (4) is operable to at least partially retrieve said information from a remote resource via the communication interface (48) or a further communication interface,
and wherein the control system (16) is operable to determine if said information is stored on the machine and if not then to obtain said information from the remote resource.

2. The beverage or foodstuff preparation machine according to claim 1, wherein the control system (16) is operable to: use the auxiliary component information to reconfigure the user interface to enable a user to select one or more preparation processes that at least partially utilise the auxiliary component.

3. The beverage or foodstuff preparation machine according to either of the directly preceding claims, wherein the control system (16) programmable using the auxiliary component information to control the component processing unit to be operable to execute the one or more processes that at least partially utilise the auxiliary component.

4. The beverage or foodstuff preparation machine according to any of the preceding claims, wherein the auxiliary component interface (50) comprises a wireless communication interface.

5. The beverage or foodstuff preparation machine according to any of the preceding claims, wherein the auxiliary component interface (50) comprises a docking interface (54) for docking an auxiliary component with the machine.

6. The beverage or foodstuff preparation machine according to any of the preceding claims, wherein the control system (16) is operable to: receive auxiliary component information from a plurality of auxiliary components; and to enable using the auxiliary component information a user to select via the user interface one or more preparation processes that at least partially utilise each and/or a combination of the auxiliary components.

7. The beverage or foodstuff preparation machine according to any of the preceding claims when dependent on claim 2, whereby the control system (16) is operable to reconfigure the user interface by displaying an auxiliary icon to select the process that at least partially utilises the auxiliary component.

8. The beverage or foodstuff preparation machine according to the directly preceding claim, wherein said reconfiguring comprise the disposition of a plurality of auxiliary icons each to select said processes about a periphery of one or a group of main icons, whereby the main icons relate to processes that are executed entirely on the beverage or foodstuff machine.

9. The beverage or foodstuff preparation machine according to any of the preceding claims, wherein the process that at least partially utilises the auxiliary component comprises:
the control system controlling the auxiliary component via the communication interface; and/or
providing instructions to an end user via the user interface for end user control of the auxiliary component.

10. A beverage or foodstuff preparation system comprising the beverage or foodstuff preparation machine according to any of the preceding claims 1 - 9 and an auxiliary component.

## Patentansprüche

1. Getränke- oder Lebensmittelzubereitungsmaschine (4), umfassend:
eine Komponentenverarbeitungseinheit (14) zum Verarbeiten einer Getränke- oder Lebensmittelkomponente, um daraus ein Getränk oder Lebensmittel zuzubereiten;
eine Zusatzkomponentenschnittstelle (50); und
ein Steuersystem (16), das betreibbar ist, um einen Zubereitungsprozess auszuführen, der eine Steuerung der Komponentenverarbeitungseinheit zum Zubereiten des Getränks oder Lebensmittels umfasst,
wobei das Steuersystem (16) eine Benutzerschnittstelle (36) zum Empfangen einer Benutzerauswahl eines Zubereitungsprozesses umfasst und ferner eine Kommunikationsschnittstelle (48) der Zusatzkomponentenschnittstelle zum Empfangen von Zusatzkomponenteninformationen umfasst, die auf einer Zusatzkomponente gespeichert sind,
wobei das Steuersystem (16) betreibbar ist zum: Empfangen der Zusatzkomponenteninformationen von einer Zusatzkomponente; und Ermöglichen, unter Verwendung der empfangenen Zusatzkomponenteninformationen, dass ein Benutzer über die Benutzerschnittstelle einen oder mehrere Zubereitungsprozesse auswählt, die mindestens teilweise die Zusatzkomponente nutzen, wobei die Zusatzkomponenteninformationen umfassen:
Informationen zum Ermöglichen der Identifizierung der Zusatzkomponente; und/oder
Informationen zum Rekonfigurieren der Benutzerschnittstellenanzeige; und/oder
Informationen zum Programmieren eines oder mehrerer Zubereitungsprozesse, die die Zusatzkomponente verwenden;
**dadurch gekennzeichnet, dass**
das Steuersystem (16) betreibbar ist, um die empfangenen Zusatzkomponenteninformationen zu verwenden, um Benutzerschnittstellenkonfigurationsinformationen abzurufen und/oder Prozessinformationen für Prozesse abzurufen, die die Zusatzkomponente mindestens teilweise nutzen,
wobei die Maschine (4) betreibbar ist, um die Informationen mindestens teilweise von einer entfernten Ressource über die Kommunikationsschnittstelle (48) oder eine weitere Kommunikationsschnittstelle abzurufen,
und wobei das Steuersystem (16) betreibbar ist, um zu bestimmen, ob die Informationen auf der Maschine gespeichert sind, und wenn nicht, die Informationen dann von der entfernten Ressource zu erhalten.

2. Getränke- oder Lebensmittelzubereitungsmaschine nach Anspruch 1, wobei das Steuersystem (16) betreibbar ist zum: Verwenden der Zusatzkomponenteninformationen, um die Benutzerschnittstelle zu rekonfigurieren, um es einem Benutzer zu ermöglichen, einen oder mehrere Zubereitungsprozesse auszuwählen, die die Zusatzkomponente mindestens teilweise nutzen.

3. Getränke- oder Lebensmittelzubereitungsmaschine nach einem der direkt vorstehenden Ansprüche, wobei das Steuersystem (16) unter Verwendung der Zusatzkomponenteninformationen programmierbar ist, um die Komponentenverarbeitungseinheit zu steuern, um dazu betreibbar zu sein, den einen oder die mehreren Prozesse auszuführen, die die Zusatzkomponente mindestens teilweise nutzen.

4. Getränke- oder Lebensmittelzubereitungsmaschine nach einem der vorstehenden Ansprüche, wobei die Zusatzkomponentenschnittstelle (50) eine drahtlose Kommunikationsschnittstelle umfasst.

5. Getränke- oder Lebensmittelzubereitungsmaschine nach einem der vorstehenden Ansprüche, wobei die Zusatzkomponentenschnittstelle (50) eine Dockingschnittstelle (54) zum Andocken einer Zusatzkomponente an die Maschine umfasst.

6. Getränke- oder Lebensmittelzubereitungsmaschine nach einem der vorstehenden Ansprüche, wobei das Steuersystem (16) betreibbar ist zum: Empfangen von Zusatzkomponenteninformationen von einer Vielzahl von Zusatzkomponenten; und um es einem Benutzer unter Verwendung der Zusatzkomponenteninformationen zu ermöglichen, über die Benutzerschnittstelle einen oder mehrere Zubereitungsprozesse auszuwählen, die mindestens teilweise jede und/oder eine Kombination der Zusatzkomponenten nutzen.

7. Getränke- oder Lebensmittelzubereitungsmaschine nach einem der vorstehenden Ansprüche, wenn abhängig von Anspruch 2, wobei das Steuersystem (16) betreibbar ist, um die Benutzeroberfläche durch Anzeigen eines Zusatzsymbols zu rekonfigurieren, um den Prozess auszuwählen, der die Zusatzkomponente mindestens teilweise nutzt.

8. Getränke- oder Lebensmittelzubereitungsmaschine nach dem direkt vorstehenden Anspruch, wobei das Rekonfigurieren die Anordnung einer Vielzahl von Zusatzsymbolen jeweils zum Auswählen der Prozesse um einen Umfang eines oder einer Gruppe von Hauptsymbolen herum umfassen, wobei sich die Hauptsymbole auf Prozesse beziehen, die vollständig auf der Getränke- oder Lebensmittelmaschine ausgeführt werden.

9. Getränke- oder Lebensmittelzubereitungsmaschine nach einem der vorstehenden Ansprüche, wobei der Prozess, der die Zusatzkomponente mindestens teilweise nutzt, umfasst:
Steuern der Zusatzkomponente durch das Steuersystem über die Kommunikationsschnittstelle; und/oder Bereitstellen von Anweisungen an einen Endbenutzer über die Benutzerschnittstelle zum Steuern der Zusatzkomponente durch den Endbenutzer.

10. Getränke- oder Lebensmittelzubereitungssystem, umfassend die Getränke- oder Lebensmittelzubereitungsmaschine nach einem der vorstehenden Ansprüche 1 bis 9 und eine Zusatzkomponente.

## Revendications

1. Machine de préparation de boisson ou de produit alimentaire (4) comprenant :
une unité de traitement de composant (14) pour traiter un composant de boisson ou de produit alimentaire pour préparer une boisson ou un produit alimentaire à partir de celle-ci ;
une interface de composant auxiliaire (50) ; et
un système de commande (16) fonctionnel pour exécuter un procédé de préparation comprenant la commande de ladite unité de traitement de composant pour préparer la boisson ou le produit alimentaire,
le système de commande (16) comprenant une interface utilisateur (36) pour recevoir une sélection par l'utilisateur d'un procédé de préparation et comprenant en outre une interface de communication (48) de l'interface de composant auxiliaire pour recevoir des informations de composant auxiliaire stockées sur un composant auxiliaire,
le système de commande (16) fonctionnel pour : recevoir lesdites informations de composant auxiliaire depuis un composant auxiliaire ; et permettre, en utilisant les informations de composant auxiliaire reçues, à un utilisateur de sélectionner par l'intermédiaire de l'interface utilisateur un ou plusieurs procédés de préparation qui utilisent au moins partiellement le composant auxiliaire les informations de composant auxiliaire comprenant :
des informations pour permettre l'identification du composant auxiliaire ; et/ou
des informations pour reconfigurer l'affichage d'interface utilisateur ; et/ou
des informations pour programmer un ou plusieurs procédés de préparation qui utilisent le composant auxiliaire ;
**caractérisée en ce que**
le système de commande (16) est fonctionnel pour utiliser les informations de composant auxiliaire reçues pour récupérer des informations de configuration d'interface utilisateur et/ou récupérer des informations de procédé pour des procédés qui utilisent au moins partiellement le composant auxiliaire,
dans laquelle ladite machine (4) est fonctionnelle pour récupérer au moins partiellement lesdites informations provenant d'une ressource distante par l'intermédiaire de l'interface de communication (48) ou d'une interface de communication supplémentaire,
et dans laquelle le système de commande (16) est fonctionnel pour déterminer si lesdites informations sont stockées sur la machine et dans la négative pour obtenir alors lesdites informations auprès de la ressource distante.

2. Machine de préparation de boisson ou de produit alimentaire selon la revendication 1, dans laquelle le système de commande (16) est fonctionnel pour : utiliser les informations de composant auxiliaire pour reconfigurer l'interface utilisateur pour permettre à un utilisateur de sélectionner un ou plusieurs procédés de préparation qui utilisent au moins partiellement le composant auxiliaire.

3. Machine de préparation de boisson ou de produit alimentaire selon l'une ou l'autre des revendications qui précèdent directement, dans laquelle le système de commande (16) est programmable en utilisant les informations de composant auxiliaire pour commander l'unité de traitement de composant pour être fonctionnelle pour exécuter le ou les procédés qui utilisent au moins partiellement le composant auxiliaire.

4. Machine de préparation de boisson ou de produit alimentaire selon l'une quelconque des revendications précédentes, dans laquelle l'interface de composant auxiliaire (50) comprend une interface de communication sans fil.

5. Machine de préparation de boisson ou de produit alimentaire selon l'une quelconque des revendications précédentes, dans laquelle l'interface de composant auxiliaire (50) comprend une interface d'accueil (54) pour accueillir un composant auxiliaire avec la machine.

6. Machine de préparation de boisson ou de produit alimentaire selon l'une quelconque des revendications précédentes, dans laquelle le système de commande (16) est fonctionnel pour : recevoir des informations de composant auxiliaire provenant d'une pluralité de composants auxiliaires ; et pour permettre en utilisant les informations de composant auxiliaire à un utilisateur de sélectionner par l'intermédiaire de l'interface utilisateur un ou plusieurs procédés de préparation qui utilisent au moins partiellement chacun et/ou une combinaison des composants auxiliaires.

7. Machine de préparation de boisson ou de produit alimentaire selon l'une quelconque des revendications précédentes prise en dépendance de la revendication 2, moyennant quoi le système de commande (16) est fonctionnel pour reconfigurer l'interface utilisateur en affichant une icône auxiliaire pour sélectionner le procédé qui utilise au moins partiellement le composant auxiliaire.

8. Machine de préparation de boisson ou de produit alimentaire selon la revendication qui précède directement, dans laquelle ladite reconfiguration comprend la disposition d'une pluralité d'icônes auxiliaires permettant chacune de sélectionner lesdits procédés autour d'une périphérie d'une ou d'un groupe d'icônes principales, moyennant quoi les icônes principales se rapportent à des procédés qui sont exécutés entièrement sur la machine à boisson ou produit alimentaire.

9. Machine de préparation de boisson ou de produit alimentaire selon l'une quelconque des revendications précédentes, dans laquelle le procédé qui utilise au moins partiellement le composant auxiliaire comprend :
le système de commande commandant le composant auxiliaire par l'intermédiaire de l'interface de communication ; et/ou la fourniture d'instructions à un utilisateur final par l'intermédiaire de l'interface utilisateur pour une commande du composant auxiliaire par l'utilisateur final.

10. Système de préparation de boisson ou de produit alimentaire comprenant la machine de préparation de boisson ou de produit alimentaire selon l'une quelconque des revendications précédentes 1 à 9 et un composant auxiliaire.
